# EUROPÄISCHE PATENTSCHRIFT

(11) **EP 1 834 102 B1**
(45) Veröffentlichungstag und Bekanntmachung des Hinweises auf die Patenterteilung: **03.09.2008**
(21) Anmeldenummer: 05700670.2
(22) Anmeldetag: 03.01.2005
(51) Int. Cl.: F16B 21/18

(54) **WELLEN-NABEN-VERBINDUNG MIT SICHERUNGSSYSTEM**
SHAFT/HUB CONNECTION WITH A SECURING SYSTEM
LIAISON ARBRE-MOYEU A SYSTEME D'ARRET

(43) Veröffentlichungstag der Anmeldung: 19.09.2007
(73) Patentinhaber: GKN Driveline International GmbH, 53797 Lohmar (DE)
(72) Erfinder: GUTIERREZ, Iñaki, E-20003 San Sebastian (ES); DIEZ, Marta, 20018 San Sebastian (ES); MANDADO, Enrique, 36201 Vigo (ES); LUCAS, Grégory, 86156 Augsburg (DE)
(74) Vertreter: Maxton Langmaack & Partner
(86) Internationale Anmeldenummer: PCT/EP2005/000005
(87) Internationale Veröffentlichungsnummer: WO 2006/074683

(56) Entgegenhaltungen:
- EP-A- 0 902 196
- US-A- 4 077 232
- US-A1- 2002 131 817

## Beschreibung

Die Erfindung betrifft eine Anordnung umfassend eine Welle mit einer Außenwellenverzahnung begrenzter Länge, die an einem Wellenende ausgebildet ist, und eine Nabe mit einer Innenwellenverzahnung, die sich im wesentlichen über die Länge der Nabe erstreckt, wobei die Außenwellenverzahnung und die Innenwellenverzahnung zur Drehmomentübertragung zwischen Welle und Nabe ineinandergreifen, erste Axialsicherungsmittel, die zwischen Welle und Nabe wirksam sind, die einem weiteren Aufschieben der Nabe auf die Welle entgegenwirken, die durch eine Anschlagfläche an der Nabe und eine Gegenfläche an der Welle oder einem mit dieser verbundenem Teil am wellenschaftseitigen Ende der Nabe gebildet werden, und zweite Axialsicherungsmittel, die zwischen Welle und Nabe wirksam sind und einem Abziehen der Nabe von der Welle entgegenwirken, die einen am Wellenende und am wellenendseitigen Ende der Nabe liegenden Sicherungsring umfassen, der in radiale Ausnehmungen in der Welle und in der Nabe eingreift, die Anlageflächen für diesen an Welle und Nabe bilden. Weiterhin betrifft die Erfindung ein Verfahren zur Herstellung einer Welle für eine derartige Verbindung.

Bekannte Sicherungssysteme zwischen einer Welle und einer Nabe mit Kugelbahn eines Gleichlaufgelenks sind so ausgebildet, daß zwischen der Welle und der Nabe ein jeweils in einer Nut geführter Sicherungsring vorgesehen ist, der das axiale Lösen der Nabe von der Welle verhindert. Hierbei gibt es bisher zwei unterschiedliche konstruktive Ausgestaltungen der in der Nabe angeordneten Nut. Die erste Ausgestaltung ist für eine demontierbare Wellen-Naben-Verbindung vorgesehen und die zweite Ausgestaltung für eine nicht demontierbare Wellen-Naben-Verbindung. Hierbei gibt es nur eine konstruktive Ausführung für eine Welle mit einer Außenwellenverzahnung mit einer konstruktiven Ausführung einer Ringnut, wobei die Ringnut zwei steile Flanken unter 0° aufweist.

Die lösbare Ausgestaltung der Wellen-Naben-Verbindung sieht vor, daß der Sicherungsring während des Betriebs des Gleichlaufgelenks die Nabe auf der Welle gegen axiales Lösen sichert, wohingegen zu Zwecken einer Reparatur bzw. Wartung die konstruktive Gestaltung so gewählt ist, daß die Nabe grundsätzlich von der Welle lösbar ist. Die lösbare Variante sieht vor, daß die Sicherungsnut in der Nabe eine dem Wellenende zugewandte Flanke mit einem Winkel größer gleich (>=) 15° aufweist. Die Sicherungsnut der Nabe erzeugt die Druckkräfte auf den Sicherungsring, so daß der Sicherungsring zusammengepreßt wird und die Nabe lösbar ist.

Die nicht lösbare Ausgestaltung der Wellen-Naben-Verbindung sieht vor, daß der Sicherungsring während des Betriebs des Gleichlaufgelenks die Nabe auf der Welle gegen axiales Lösen sichert, wobei die konstruktive Gestaltung so gewählt ist, daß die Nabe grundsätzlich von der Welle nicht lösbar ist. Die nicht lösbare Variante sieht vor, daß die Sicherungsnut in der Nabe eine dem Wellenende zugewandte Flanke mit einem Winkel kleiner gleich (<=) 6° aufweist. Die Sicherungsnut der Nabe erzeugt bei dieser Variante keine Druckkräfte auf den Sicherungsring, so daß der Sicherungsring nicht zusammengepreßt wird und die Nabe nicht lösbar ist.

Somit müssen nach dem Stand der Technik zwei verschiedene konstruktive Ausgestaltungen der Nabe produziert werden, um eine lösbare und eine nicht lösbare Variante zu schaffen. Hierdurch werden die Produktionskosten stark erhöht, da zwei Varianten hergestellt und vorgehalten werden müssen. Nachteilig ist vor allem, daß in der Produktion bzw. Montage die beiden Varianten der Nabe nur sehr schwer voneinander unter-schieden werden können, wenn Sie vorher nicht entsprechend markiert wurden hinsichtlich des Merkmals "lösbar" oder "nicht lösbar". Der Unterschied der lösbaren Variante und der unlösbaren Variante ist aufgrund des äußerst geringen Unterschieds des Flankenwinkels der Sicherungsnut optisch kaum zu unterscheiden. Das zusätzliche Vorsehen einer "Identifizierungsnut" oder einer anderen Markierung, die auch nach der Montage noch sichtbar ist, verursacht zusätzliche Kosten.

Eine Anordnung mit axialen Sicherungsmitteln ist aus der DE 42 29 726 A1 bekannt. Hierbei werden die ersten axialen Sicherungsmittel von dem Wellenauslauf der Außenwellenverzahnung, der Stirnseite der Nabe oder der Innenwellenverzahnung und einem von diesen umgeformten plastischen Zwischenring gebildet. Die zweiten Axialsicherungsmittel bestehen aus einem einfachen Rechteckring, der sich gegen das wellenendseitige Ende der Nabe anlegt und der in einer einfachen Rechtecknut der Welle am überstehenden Wellenende einsitzt. Diese zweiten Axialsicherungmittel sind nur zu verwenden, wenn zur Montage und Demontage ein freier Zugang zu ihrer räumlichen Anordnung gegeben ist. Dies ist zum Beispiel nicht der Fall; wenn eine Welle mit einer Kugelnabe eines fertigmontierten, einseitig geschlossenen Drehgelenks montiert werden muß. Hier ist ein auf der Welle in der Ringnut vormontierter selbsteinrastender Sicherungsring erforderlich.

Aus der JP 5-22089 B2 ist eine Anordnung umfassend einen Nabenkörper und eine Welle bekannt, bei dem der Nabenkörper als Kegelrad eines Differentialgetriebes ausgebildet ist. Hierbei fehlen erste Axialsicherungsmittel zwischen dem Nabenkörper und der Welle vollständig, da sich der Nabenkörper axial an einem Gehäuse abstützt, in dem die Welle gelagert ist. Die Außenwellenverzahnung ist hierbei bis an das Wellenende geführt. In einigem Abstand vom Wellenende ist eine Ringnut mit einer abgeschrägten Flanke im Bereich der Verzahnung eingestochen. Ein Einstecken der Welle mit in die Ringnut eingesetztem Sicherungsring in den Nabenkörper ist hierbei möglich. Der Sicherungsring mit rundem Querschnitt wird dabei elastisch in die Ringnut gedrängt und legt sich nach dem Aufschieben der Nabe an einer schrägen Flanke der Nabe elastisch ausfedernd an, so daß eine Zugänglichkeit der Ringnut nach dem Aufschieben nicht gegeben sein muß. Da die Ringnut im Bereich der gehärteten Außenwellenverzahnung eingestochen ist, kann es jedoch beim Aufschieben der Nabe mit ihrer Innenwellenverzahnung, insbesondere bei einer Preßverbauung, dazu kommen, daß an den Zahnkanten Späne gezogen werden, die nicht vorhersehbare Montagekräfte verursachen.

Aus der GB 1 511 290 ist eine Verbindung zwischen einer innenverzahnten Hülse und einem ringförmigen Scheibenelement bekannt, wobei letzteres zur axialen Verspannung von federelastischen Ringelementen dient, die mit Außenverzahnungen in die Innenverzahnung der Hülse eingreifen. Der Scheibenkörper greift hierbei mit einer Außenverzahnung ebenfalls in die Innenverzahnung der Hülse ein und ist mit einem Sicherungsring axial gesichert, der in Ausnehmungen in der Hülse und in dem Scheibenelement gehalten ist. Hierbei hat das Scheibenelement einen Zapfenansatz, der von geringerem Außendurchmesser ist als der Kopfkreisdurchmesser der Innenverzahnung der Hülse und der Fußkreisdurchmesser der kurzen Außenverzahnung des Scheibenelementes. Eine Drehmomentübertragung zwischen Hülse und Scheibenelement findet nicht statt.

Aus der GB 855 282 ist eine Anordnung aus einer Nabe und einer Welle bekannt, bei der ein Sicherungsring von rundem Querschnitt in Ausnehmungen in der Nabe und in der Welle eingreift, die nahe dem wellenschaftseitigen Ende der Nabe ausgebildet sind. Hierbei ist in die Welle eine Ringnut in die vollständig durchgeführte Außenwellenverzahnung eingestochen, während in der Nabe eine Ringnut in die Innenwellenverzahnung eingestochen ist, die jedoch von der Ringnut bis zum wellenschaftseitigen Ende der Nabe in der Zahnhöhe deutlich reduziert ist. Die hiermit beschriebenen Mittel stellen die Axialsicherung in beiden Axialrichtungen dar.

Aus der DE 78 09 284 U1 ist eine Anordnung aus einer Nabe und einer Welle mit einer Außenwellenverzahnung und einer Nabe mit einer Innenwellenverzahnung bekannt, bei der am Wellenende ein Übergangskonus von dem Kopfkreisdurchmesser der Außenwellenverzahnung auf einen Zapfendurchmesser geringeren Durchmessers vorgesehen ist, wobei der Zapfen als Schraubzapfen ausgebildet ist. In der Nabe ist in einigem Abstand vom wellenendseitigen Ende die Innenwellenverzahnung beendet und eine Innenringnut eingestochen, wobei von der Ringnut bis zum wellenendseitigen Nabenende der Innendurchmesser etwa dem Fußkreisdurchmesser der Innenwellenverzahnung entspricht. Auf den Schraubzapfen ist eine Mutter aufgeschraubt, die sich an der Nabe anlegt. Ein Sicherungsring mit Kreisquerschnitt liegt zwischen dem Übergangskonus an der Welle und einem Gegenkonus an der Mutter und sitzt in der Ringnut in der Nabe ein.

Aus der DE 40 40 337 A1 ist eine Axialsicherung zwischen einer Nabe und einer Welle bekannt, bei der jedoch keine drehmomentübertragenden Mittel, d. h. insbesondere keine Wellenverzahnungen vorgesehen sind. Ein Sicherungsring liegt in Ausnehmungen in der Nabe und einer Ringnut nahe dem Wellenende ein, wobei der Durchmesser der Welle zwischen der Ringnut in der Welle und dem Wellenende verringert ist.

Sdließhch offentant US- 4077232 A eine walk -Nabe-Vesbindung gemäß dem ofertegiff des Anspunchs 1. Der vorliegenden Erfindung liegt die Aufgabe zugrunde, eine Anordnung der eingangs bezeichneten Art bereitzustellen, bei der Ausnehmungen in der Nabe und Welle so ausgeführt sind, daß eine in der Welle vorgesehene Ausnehmung zur Aufnahme eines axialen Sicherungsmittels vorgesehen ist, die eine nicht lösbare Verbindung von Welle und Nabe gewährleistet bei leichter Identifizierbarkeit, wobei die Festigkeit der Welle nicht unnötig geschwächt ist, und die sich einfach und kostengünstig herstellen läst.

Die Lösung hierfür liegt darin, daß die radiale Ausnehmung der Welle eine erste Anschlagfläche für den Sicherungsring bildet, wobei die radiale Ausnehmung als eine Ringnut ausgebildet ist mit einem Ringnutdurchmesser d1 und einer in Richtung des Wellenendes sich anschließenden Ringnutstufe mit einem Ringnutstufendurchmesser d2, wobei d2 größer d1 ist, und daß die Nabe am wellenendseitigen Ende eine erweiternde Eindrehung hat, die eine zweite Anschlagfläche für den Sicherungsring bildet, und daß der Sicherungsring als Rundsprengring ausgebildet ist.

Die Anordnung der Ausnehmungen in Welle und Nabe in unmittelbarer Nähe des Wellenendes ermöglichen ein ungeschwächtes Wellenprofil im gesamten Verzahnungsbereich und im gesamten Bereich des Wellenschaftes.

Durch die erfindungsgemäße Gestaltung der Ringnut und der Ringnutstufe ist sichergestellt, daß die Nabe nicht zerstörungsfrei von der Welle demontierbar ist, da bei einer Aufbringung axialer Zugkräfte zwischen Nabe und Welle im Sinne eines Abziehens der Nabe von der Welle der Sprengring durch die Anlageflächen an der Nabe nicht in die Ringnut zurückgedrängt wird sondern an die Kante zwischen Ringnutstufe und wellenendseitiger Flanke gedrängt wird. Bei einer Axialbelastung zwischen Nabe und Welle im Sinne eines Abziehens der Nabe kann der Sicherungsring zerquetscht werden, so daß es zu einer vollständigen Verkeilung und damit gegebenenfalls auch zu einer Beschädigung der Innenwellenverzahnung der Nabe bei einem erzwungenen Abziehen kommt.

In vorteilhafter Ausgestaltung der Erfindung ist vorgesehen, daß der Ringnutstufendurchmesser d2 kleiner ist als der Zahnfußdurchmesser der Außenwellenverzahnung der Welle.

In ebenfalls vorteilhafter Ausgestaltung der Erfindung ist vorgesehen, daß die Spaltbreite der Ringnut größer gleich (>=) dem Durchmesser des Ringquerschnitts des Sicherungsringes ist und die Spaltbreite der Ringnutstufe kleiner gleich (<=) dem Durchmesser des Ringquerschnitts des Sicherungsringes ist.

In zusätzlich vorteilhafter Ausgestaltung der Erfindung ist vorgesehen, daß die Spaltbreite der Ringnut größer als die Spaltbreite der Ringnutstufe ist.

In weiterer vorteilhafter Ausgestaltung der Erfindung ist vorgesehen, daß die Spaltbreite der Ringnut annähernd doppelt so groß ist wie die Spaltbreite der Ringnutstufe.

In ebenfalls vorteilhafter Ausgestaltung der Erfindung ist vorgesehen, daß die Ringnut eine zur Wellenachse dem Wellenschaft zugewandte senkrechte Flanke und dem Wellenende zugewandte senkrechte Flanke aufweist, und die Ringnutstufe eine dem Wellenende zugewandte senkrechte Flanke aufweist.

In besonders vorteilhafter Ausgestaltung der Erfindung ist vorgesehen, daß der Durchmesser des Ringquerschnitts des Sicherungsringes größer ist als der Abstand zwischen dem Nutgrund der Ringnutstufe und der Umfangsfläche der Ausnehmung.

Weiterhin ist vorgesehen, daß die ersten Axialsicherungsmittel einen Verzahnungsauslauf der äußeren Wellenverzahnung und eine entsprechende Zahnkantenbrechung am wellenschaftseitigen Ende der Innenwellenverzahnung der Nabe umfassen. Dies stellt eine konstruktiv günstige Lösung dar. Es sind jedoch auch Ausführungen gemäß dem gattungsbildenden Stand der Technik möglich.

Bei einer lösbaren Verbindung der Nabe und der Welle weist die Nabe eine schräge Anlagefläche auf und es ist nur eine Ringnut vorgesehen, die zwei zur Wellenachse senkrechte Flanken aufweist, so daß bei einer Aufbringung axialer Zugkräfte zwischen Nabe und Welle im Sinne eines Abziehens der Nabe von der Welle der Sprengring durch die Anlagefläche an der Nabe in die Ringnut zurückgedrängt wird und die Nabe darüber hinweg abgezogen werden kann.

Bevorzugte Ausführungsbeispiele der Erfindung werden nachstehend anhand von vier Zeichnungen erläutert.
- Figur 1: zeigt eine erfindungsgemäße Anordnung aus Welle, Sicherungsring und Nabe an einer nicht demontierbaren Ausführung der Anordnung;
- Figur 2: zeigt eine vergrößerte Darstellung der erfindungsgemäße Anordnung aus Welle, Sicherungsring und Nabe gemäß Figur 1 an einer nicht demontierbaren Ausführung der Anordnung;
- Figur 3: zeigt eine erfindungsgemäße Anordnung aus Welle, Sicherungsring und Nabe an einer demontierbaren Ausführung der Anordnung;
- Figur 4: zeigt eine vergrößerte Darstellung der erfindungsgemäße Anordnung aus Welle, Sicherungsring und Nabe gemäß Figur 1 an einer demontierbaren Ausführung der Anordnung;

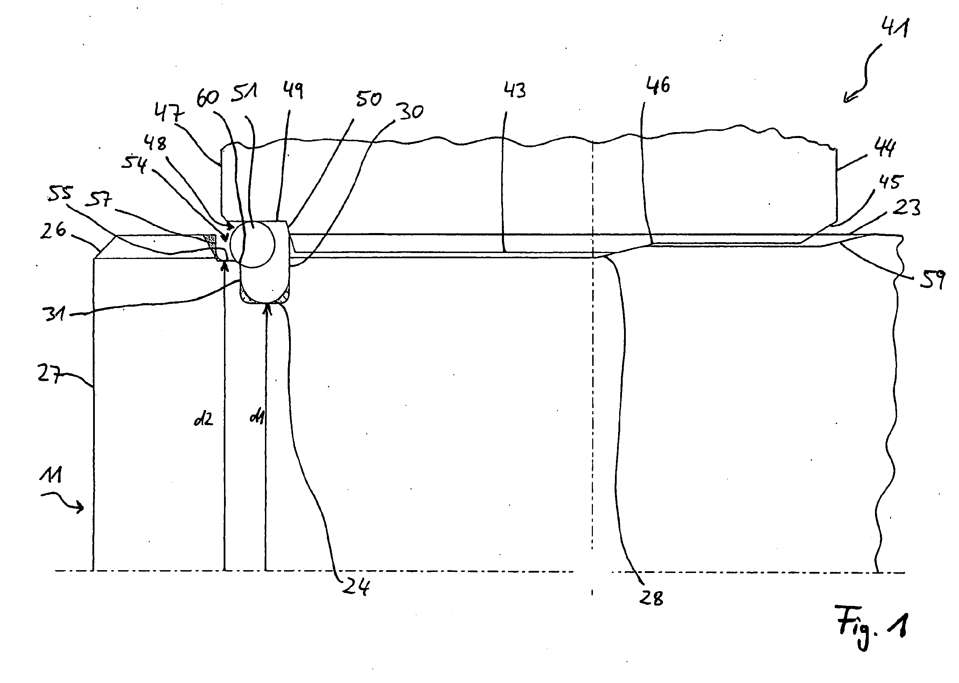

In Figur 1 ist eine Welle 11, eine Nabe 41 und ein Sicherungsring 51 gezeigt, an denen die folgenden Einzelheiten zu erkennen sind. An der Welle 11 sind von rechts nach links der abgebrochen dargestellte Wellenschaft 21 eine Außenwellenverzahnung 23, eine Ringnut 24 und eine Ringnutstufe 55 zu erkennen. Die Welle 11 mit Außenwellenverzahnung 23 endet mit einer Kantenbrechung 26 in der Stirnfläche 27, die begrifflich auch als Wellenende bezeichnet werden kann. Die Außenwellenverzahnung 23 endet in einem Verzahnungsauslauf 59, in dem die Wellennuten auslaufen. Die Ringnut 24 hat wellenschaftseitig eine steile radiale Flanke 30, einen im Querschnitt gerundeten, dem Sicherungsring angepaßten Nutgrund sowie eine steile radiale Flanke 31, die eine geringere Höhe aufweist als die radiale Flanke 30.

Die Nabe 41 weist eine nicht dargestellte Kugelbahn auf, die für die Verbindung keine weitere Bedeutung hat, und eine Innenwellenverzahnung 43, die in die Außenwellenverzahnung 23 im Drehsinn formschlüssig eingreift. Weiterhin sind an der Nabe eine wellenschaftseitige Stirnfläche 44 und eine wellenendseitige Stirnfläche 47 bezeichnet, die begrifflich den jeweiligen Enden gleichzusetzen sind. Von der wellenschaftseitigen Stirnfläche 44 ausgehend ist in der Nabe 41 ein Innenkonus 45 ausgebildet, dessen Öffnungswinkel dem Neigungswinkel des Verzahnungsauslaufes 59 der Außenwellenverzahnung 23 entsprechen kann. Ferner ist ein Innenkonus vorgesehen, der eine Kantenbrechung 46 mit großem Schrägungswinkel an der Innenwellenverzahnung 43 bildet, die mit dem Verzahnungsauslauf 28 zusammenwirkt und erste Anschlagmittel gegen ein weiteres Aufschieben der Nabe auf die Welle bei Erreichen der konstruktiv bestimmten Endposition bildet. Alternativ könnte dies beispielsweise auch im Bereich des Innenkonusses 45 in Zusammenwirkung mit dem Schrägauslauf 59 erfolgen, um ein erstes Anschlagmittel zu bilden. An der wellenendseitigen Stirnfläche 47 der Nabe 41 hat die Nabe eine Ausnehmung 48, die zum einen eine zylindrische Umfangsfläche 49 und zum anderen eine konische Anschlagfläche 50 für den Sicherungsring bildet. Der Durchmesser der Ausnehmung kann geringer sein als der Zahnfußdurchmesser der Innenwellenverzahnung 43, so daß die Flächen 49 und 50 von den Wellennuten der Innenwellenverzahnung 43 unterbrochen sein können.

In Figur 1 ist die Nabe 41 axial vollständig mit ihrer Innenwellenverzahnung 43 auf die Außenwellenverzahnung 23 der Welle 11 aufgeschoben. Der hier in der Ringnut 24 einsitzende Sicherungsring 51 drängt unter Eigenspannung radial nach außen. Während des Aufschiebens der Nabe wird der Sicherungsring 51 mittels des Innenkonusses 45 und der sich an diesen anschließenden Innenwellenverzahnung 43 in den Nutgrund gedrückt. Die Innenkonusfläche 45 dient als Anlauffläche und die Radialfläche der Flanke 30 als Gegen- oder Führungsfläche. Die Nabe 41 bis zum Anschlag der Kantenbrechung 46 der Innenwellenverzahnung 43 an dem Verzahnungsauslauf 28 der Außenwellenverzahnung 23 aufgeschoben. Der Sicherungsring 51 ist aus dem Nutgrund ausgefedert und liegt an der Zylinderinnenfläche 49 außen an

Durch die erfindungsgemäße Gestaltung der Ringnut 24 und der Ringnutstufe 55 ist sichergestellt, daß die Nabe 41 nicht zerstörungsfrei von der Welle 11 demontierbar ist, da bei einer Aufbringung axialer Zugkräfte zwischen Nabe 41 und Welle 11 im Sinne eines Abziehens der Nabe 41 von der Welle 11 der Sprengring 51 durch die Anlagefläche 50 an der Nabe 41 nicht in die Ringnut 24 zurückgedrängt wird sondern an die Kante 60 zwischen Ringnutstufe 55 und wellenendseitiger Flanke 31 gedrängt wird. Bei einer Axialbelastung zwischen Nabe 41 und Welle 11 im Sinne eines Abziehens der Nabe 41 kann der Sicherungsring 51 zerquetscht werden, so daß es zu einer vollständigen Verkeilung und damit gegebenenfalls auch zu einer Beschädigung der Innenwellenverzahnung 43 der Nabe 41 bei einem erzwungenen Abziehen kommt.

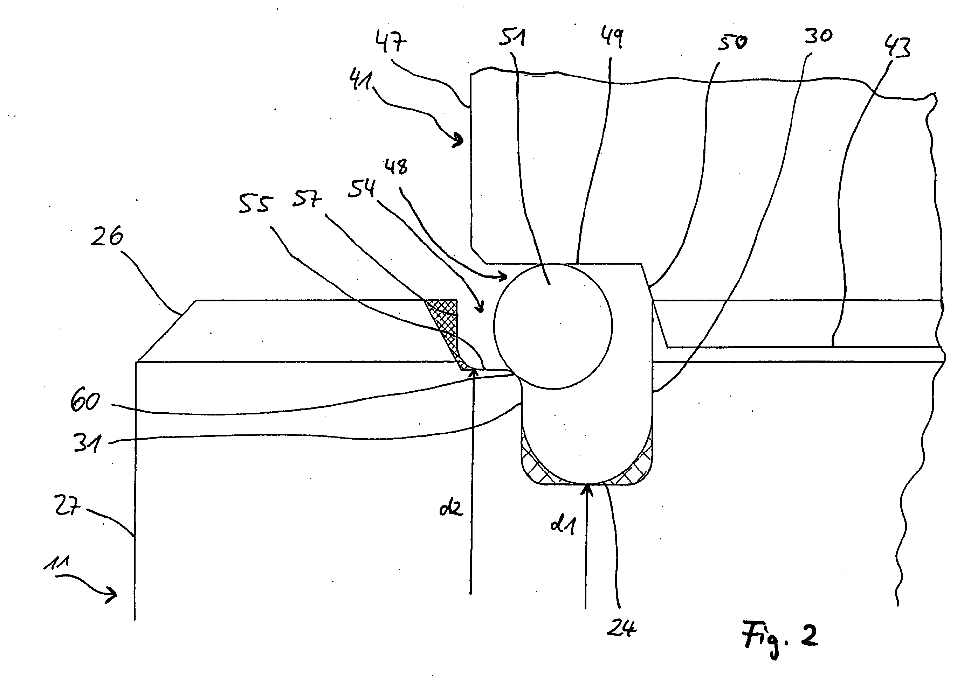

Figur 2 zeigt eine vergrößerte Darstellung der erfindungsgemäße Anordnung aus Welle, Sicherungsring und Nabe gemäß Figur 1 an einer nicht demontierbaren Ausführung der Anordnung.

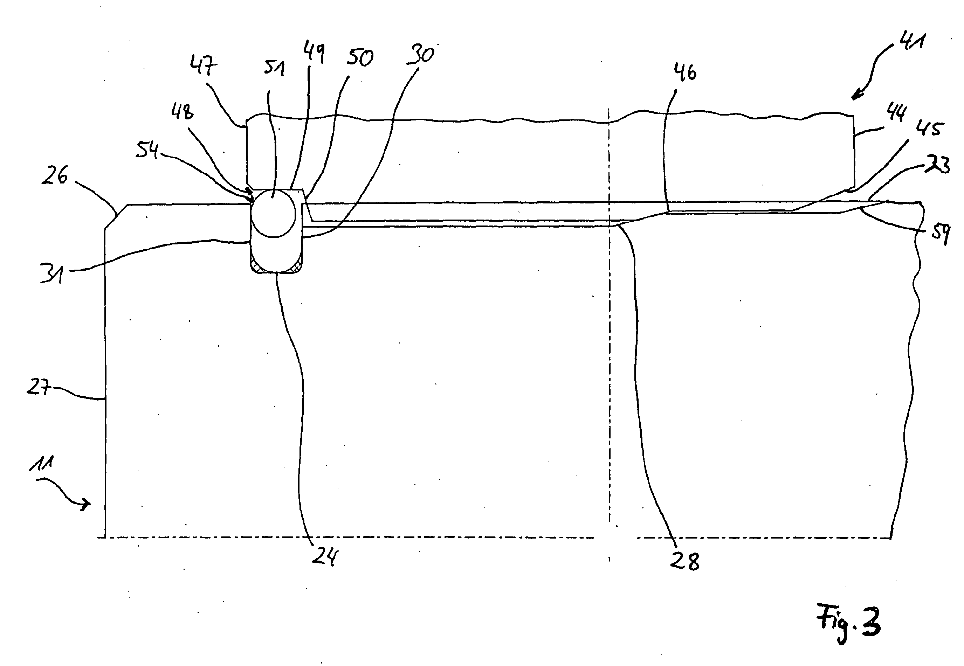

In Figur 3 ist eine Welle 11, eine Nabe 41 und ein Sicherungsring 51 gezeigt, an denen die folgenden Einzelheiten zu erkennen sind. An der Welle 11 sind von rechts nach links der abgebrochen dargestellte Wellenschaft 21 eine Außenwellenverzahnung 23 und eine Ringnut 24 zu erkennen. Die Welle 11 mit Außenwellenverzahnung 23 endet mit einer Kantenbrechung 26 in der Stirnfläche 27, die begrifflich auch als Wellenende bezeichnet werden kann. Die Außenwellenverzahnung 23 endet in einem Verzahnungsauslauf 59, in dem die Wellennuten auslaufen. Die Ringnut 24 hat wellenschaftseitig eine steile radiale Flanke 30, einen im Querschnitt gerundeten, dem Sicherungsring angepaßten Nutgrund sowie eine steile radiale Flanke 31 deren Höhe der radiale Flanke 30 entspricht.

Die Nabe 41 weist eine nicht dargestellte Kugelbahn auf, die für die Verbindung keine weitere Bedeutung hat, und eine Innenwellenverzahnung 43, die in die Außenwellenverzahnung 23 im Drehsinn formschlüssig eingreift. Weiterhin sind an der Nabe eine wellenschaftseitige Stirnfläche 44 und eine wellenendseitige Stirnfläche 47 bezeichnet, die begrifflich den jeweiligen Enden gleichzusetzen sind. Von der wellenschaftseitigen Stirnfläche 44 ausgehend ist in der Nabe 41 ein Innenkonus 45 ausgebildet, dessen Öffnungswinkel dem Neigungswinkel des Verzahnungsauslaufes 59 der Außenwellenverzahnung 23 entsprechen kann. Ferner ist ein Innenkonus vorgesehen, der eine Kantenbrechung 46 mit großem Schrägungswinkel an der Innenwellenverzahnung 43 bildet, die mit dem Verzahnungsauslauf 28 zusammenwirkt und erste Anschlagmittel gegen ein weiteres Aufschieben der Nabe auf die Welle bei Erreichen der konstruktiv bestimmten Endposition bildet. Alternativ könnte dies beispielsweise auch im Bereich des Innenkonusses 45 in Zusammenwirkung mit dem Schrägauslauf 59 erfolgen, um ein erstes Anschlagmittel zu bilden. An der wellenendseitigen Stirnfläche 47 der Nabe 41 hat die Nabe eine Ausnehmung 48, die zum einen eine zylindrische Umfangsfläche 49 und zum anderen eine konische Anschlagfläche 50 für den Sicherungsring bildet. Der Durchmesser der Ausnehmung kann geringer sein als der Zahnfußdurchmesser der Innenwellenverzahnung 43, so daß die Flächen 49 und 50 von den Wellennuten der Innenwellenverzahnung 43 unterbrochen sein können.

In Figur 3 ist die Nabe 41 axial vollständig mit ihrer Innenwellenverzahnung 43 auf die Außenwellenverzahnung 23 der Welle 11 aufgeschoben. Der hier in der Ringnut 24 einsitzende Sicherungsring 51 drängt unter Eigenspannung radial nach außen. Während des Aufschiebens der Nabe wird der Sicherungsring 51 mittels des Innenkonusses 45 und der sich an diesen anschließenden Innenwellenverzahnung 43 in den Nutgrund gedrückt. Die Innenkonusfläche 45 dient als Anlauffläche und die Radialfläche der Flanke 30 als Gegen- oder Führungsfläche. Die Nabe 41 bis zum Anschlag der Kantenbrechung 46 der Innenwellenverzahnung 43 an dem Verzahnungsauslauf 28 der Außenwellenverzahnung 23 aufgeschoben. Der Sicherungsring 51 ist aus dem Nutgrund ausgefedert und liegt an der Zylinderinnenfläche 49 außen an

Durch die erfindungsgemäße Gestaltung der Ringnut 24 ist sichergestellt, daß die Nabe 41 zerstörungsfrei von der Welle 11 demontierbar ist, da bei einer Aufbringung axialer Zugkräfte zwischen Nabe 41 und Welle 11 im Sinne eines Abziehens der Nabe 41 von der Welle 11 der Sprengring 51 durch die Anlagefläche 50 an der Narbe 41 in die Ringnut 24 zurückgedrängt wird, wobei die Flanke 31 als Gegen- oder Führungsfläche wirkt.

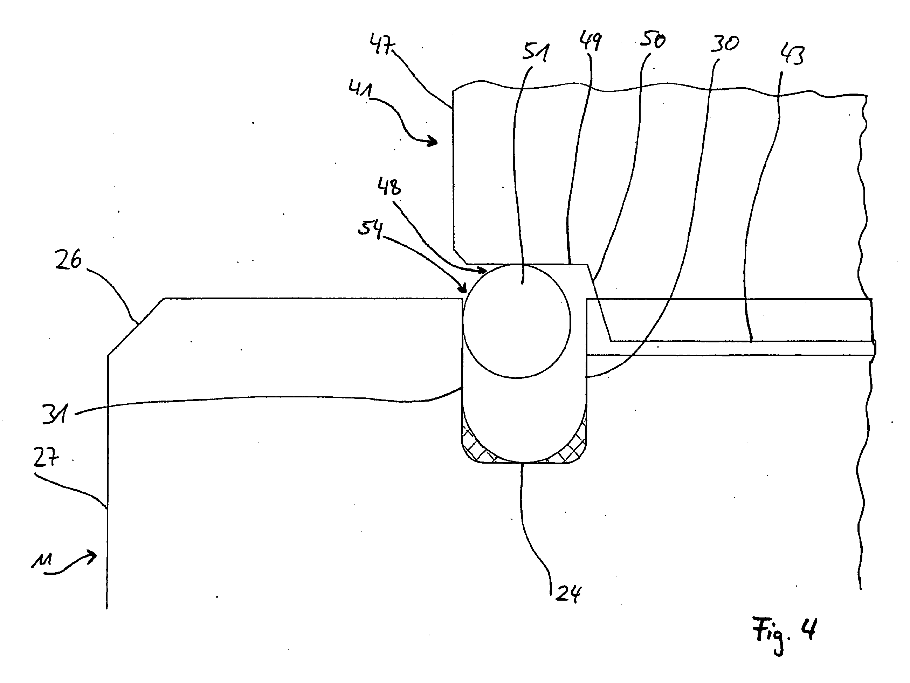

Figur 4 zeigt eine vergrößerte Darstellung der erfindungsgemäße Anordnung aus Welle, Sicherungsring und Nabe gemäß Figur 1 an einer nicht demontierbaren Ausführung der Anordnung.

## Patentansprüche

1. Anordnung umfassend eine Welle (11) mit einer Außenwellenverzahnung (23) begrenzter Länge, die an einem Wellenende ausgebildet ist, und eine Nabe (41) mit einer Innenwellenverzahnung (43), die sich im wesentlichen über die Länge der Nabe (41) erstreckt, wobei die Außenwellenverzahnung (23) und die Innenwellenverzahnung (43) zur Drehmomentübertragung zwischen Welle (11) und Nabe (41) ineinandergreifen, erste Axialsicherungsmittel, die zwischen Welle (11) und Nabe (41) wirksam sind, die einem weiteren Aufschieben der Nabe (41) auf die Welle (11) entgegenwirken, die durch eine Anschlagfläche an der Nabe (41) und eine Gegenfläche an der Welle (11) oder einem mit dieser verbundenem Teil am wellenschaftseitigen Ende (44) der Nabe (41) gebildet werden, und zweite Axialsicherungsmittel, die zwischen Welle (11) und Nabe (41) wirksam sind und einem Abziehen der Nabe (41) von der Welle (11) entgegenwirken, die einen am Wellenende (27) und am wellenendseitigen Ende (47) der Nabe (41) liegenden Sicherungsring (51) umfassen, der in radiale Ausnehmungen (48, 54) in der Welle (11) und in der Nabe (41) eingreift, die Anlageflächen für diesen an Welle (11) und Nabe (41) bilden, **dadurch gekennzeichnet, daß** die radiale Ausnehmung (54) der Welle (11) eine erste Anschlagfläche für den Sicherungsring (51) bildet, wobei die radiale Ausnehmung (54) als eine Ringnut (24) ausgebildet ist mit einem Ringnutdurchmesser d1 und einer in Richtung des Wellenendes (27) sich anschließenden Ringnutstufe (55) mit einem Ringnutstufendurchmesser d2, wobei d2 größer als d1 ist, und daß die Nabe (41) am wellenendseitigen Ende (47) eine erweiternde Eindrehung (48) hat, die eine zweite Anschlagfläche für den Sicherungsring (51) bildet, und daß der Sicherungsring (51) als Rundsprengring ausgebildet ist.

2. Anordnung nach Anspruch 1, **dadurch gekennzeichnet, daß** der Ringnutstufendurchmesser d2 kleiner ist als der Zahnfußdurchmesser der Außenwellenverzahnung (23) der Welle (11).

3. Anordnung nach einem der Ansprüche 1 oder 2, **dadurch gekennzeichnet, daß** die Spaltbreite der Ringnut (24) größer gleich (>=) dem Durchmesser des Ringquerschnitts des Sicherungsringes (51) ist und die Spaltbreite der Ringnutstufe (55) kleiner gleich (<=) dem Durchmesser des Ringquerschnitts des Sicherungsringes (51) ist.

4. Anordnung nach einem der Ansprüche 1 bis 3, **dadurch gekennzeichnet, daß** die Spaltbreite der Ringnut (24) größer als die Spaltbreite der Ringnutstufe (55) ist.

5. Anordnung nach einem der Ansprüche 1 bis 4, **dadurch gekennzeichnet, daß** die Spaltbreite der Ringnut (24) annähernd doppelt so groß ist wie die Spaltbreite der Ringnutstufe (55).

6. Anordnung nach einem der Ansprüche 1 bis 5, **dadurch gekennzeichnet, daß** die Ringnut (24) eine zur wellenachse (56) dem Wellenschaft zugewandte senkrechte Flanke (30) und dem Wellenende zugewandte senkrechte Flanke (31) aufweist, und die Ringnutstufe (55) eine dem Wellenende zugewandte senkrechte Flanke (57) aufweist.

7. Anordnung nach einem der Ansprüche 1 bis 6, **dadurch gekennzeichnet, daß** der Durchmesser des Ringquerschnitts des Sicherungsringes (51) größer ist als der Abstand zwischen dem Nutgrund (58) der Ringnutstufe (55) und der Umfangsfläche (49) der Ausnehmung (48).

8. Anordnung nach einem der Ansprüche 1 bis 7, **dadurch gekennzeichnet, daß** die ersten Axialsicherungsmittel einen Verzahnungsauslauf (28) der äußeren Wellenverzahnung (23) und eine entsprechende Zahnkantenbrechung (46) am wellenschaftseitigen Ende der Innenwellenverzahnung (43) der Nabe (41) umfassen.

9. Anordnung nach einem der Ansprüche 1 bis 8, **dadurch gekennzeichnet, daß** die Innenwellenverzahnung (43) und die Außenwellenverzahnung (46) mittels Wärmebehandlungsverfahren gehärtet sind und die Ringnut (24) und/oder die Ringnutstufe (55) ungehärtet sind.

10. Verfahren zum Herstellen einer Welle für eine Anordnung nach einem der Ansprüche 1 bis 9, **dadurch gekennzeichnet, daß** ausgehend von einer geraden glatten Zylinderwelle zunächst in beliebiger Reihenfolge am Wellenende eine Ringnut (24) und eine Ringnutstufe (55) in geringem Abstand vom Wellenende (27) eingestochen werd, und daß anschließend die Außenwellenverzahnung (23) erzeugt wird, ohne daß die Ringnut (24) und die Ringnutstufe (55) hierbei funktionsbeeinflussend verändert werden.

11. Verfahren nach Anspruch 10, **dadurch gekennzeichnet, daß** die Außenwellenverzahnung (23) mittels einer Verzahnungsmatrize beginnend von der Ringnut (24) bis zum Verzahnungsauslauf (28) im Wellenschaft (21) durch einen axialen Preßvorgang gefertigt wird.

12. Verfahren nach Anspruch 10, **dadurch gekennzeichnet, daß** die Außenwellenverzahnung (23) mittels Rollwerkzeugen eingerollt wird.

13. Verfahren nach Anspruch 10, **dadurch gekennzeichnet, daß** die Ringnut (24) und/oder die Ringnutstufe (55) in einer einzigen Aufspannung der Welle (11) mit allen anderen Drehbearbeitungsvorgängen an der Welle (11) hergestellt wird.

14. Verfahren nach Anspruch 11, **dadurch gekennzeichnet, daß** der Verfahrensschritt zur Herstellung der Außenwellenverzahnung (23) der abschließende Bearbeitungsvorgang an der Welle (11) ist.

## Claims

1. An arrangement comprising a shaft (11) with external shaft toothing (23) of limited length formed at one end of the shaft, and a hub (41) with internal shaft toothing (43) extending substantially over the length of the hub (41), wherein the external shaft toothing (23) and the internal shaft toothing (43) mesh with one another for the transmission of torque between the shaft (11) and the hub (41), first axial securing means which are effective between the shaft (11) and the hub (41), which counteract further displacement of the hub (41) onto the shaft (11) and which are formed by a stop surface on the hub (41) and a countersurface on the shaft (11) or on a part connected thereto at that end (44) of the hub (41) facing the shaft body, and second axial securing means which are effective between the shaft (11) and the hub (41) and counteract withdrawal of the hub (41) from the shaft (11) and comprise a securing ring (51) which lies at the shaft end (27) and at that end (47) of the hub (41) facing the shaft end and engages in radial recesses (48, 54) in the shaft (11) and in the hub (41), said recesses (48, 54) forming contact surfaces for the securing ring (51) on the shaft (11) and the hub (41), **characterised in that** the radial recess (54) in the shaft (11) forms a first stop surface for the securing ring (51), wherein the radial recess (54) is formed as an annular groove (24) with an annular-groove diameter d 1 and, in the direction of the shaft end (27), an adjacent annular-groove step (55) with an annular-groove step diameter d2, wherein d2 is greater than d1, and **in that** the hub (41) has, at its end (47) facing the shaft end, a widening recess (48) which forms a second stop surface for the securing ring (51), and **in that** the securing ring (51) is formed as a round spring ring.

2. An arrangement according to claim 1, **characterised in that** the annular-groove step diameter d2 is smaller than the tooth-root diameter of the external shaft toothing (23) of the shaft (11).

3. An arrangement according to either claim 1 or claim 2, **characterised in that** the gap width of the annular groove (24) is greater than or equal to (>=) the diameter of the ring cross-section of the securing ring (51), and the gap width of the annular-groove step (55) is smaller than or equal to (<=) the diameter of the ring cross-section of the securing ring (51).

4. An arrangement according to any one of claims 1 to 3, **characterised in that** the gap width of the annular groove (24) is greater than the gap width of the annular-groove step (55).

5. An arrangement according to any one of claims 1 to 4, **characterised in that** the gap width of the annular groove (24) is approximately twice as great as the gap width of the annular-groove step (55).

6. An arrangement according to any one of claims 1 to 5, **characterised in that** the annular groove (24) has, in relation to the shaft axis (56), a perpendicular flank (30) facing the shaft body and a perpendicular flank (31) facing the shaft end, and the annular-groove step (55) has a perpendicular flank (57) facing the shaft end.

7. An arrangement according to any one of claims 1 to 6, **characterised in that** the diameter of the ring cross-section of the securing ring **(51)** is greater than the distance between the groove base (58) of the annular-groove step (55) and the circumferential surface (49) of the recess (48).

8. An arrangement according to any one of claims 1 to 7, **characterised in that** the first axial securing means comprise a toothing runout (28) of the external shaft toothing (23) and a corresponding tooth-edge deflection (46) at that end of the internal shaft toothing (43) of the hub (41) facing the shaft body.

9. An arrangement according to any one of claims 1 to 8, **characterised in that** the internal shaft toothing (43) and the external shaft toothing (46) are hardened by means of heat treatment processes and the annular groove (24) and/or the annular-groove step (55) are unhardened.

10. A method of manufacturing a shaft for an arrangement according to any one of claims 1 to 9, **characterised in that**, starting from a straight, smooth, cylindrical shaft, an annular groove (24) and an annular-groove step (55) are first cut into the end of the shaft in random order at a short distance from the shaft end, and **in that** the external shaft toothing (23) is then formed without causing function-influencing changes to the annular groove (24) and the annular-groove step (55).

11. A method according to claim 10, **characterised in that** the external shaft toothing (23) is produced by an axial pressing process by means of a toothing die, starting from the annular groove (24) and extending as far as the toothing runout (28) on the shaft body (21).

12. A method according to claim 10, **characterised in that** the external shaft toothing (23) is rolled by means of rolling tools.

13. A method according to claim 10, **characterised in that** the annular groove (24) and/or the annular-groove step (55) are manufactured in a single setting of the shaft (11) with all other turning processes on the shaft (11).

14. A method according to claim 11, **characterised in that** the method step for manufacturing the external shaft toothing (23) is the final machining process on the shaft (11).

## Revendications

1. Dispositif comprenant un arbre (11) comportant une denture extérieure (23) de longueur limitée aménagée sur une extrémité de l'arbre, et un moyeu (41) comportant une denture intérieure (43) s'étendant pour l'essentiel sur la longueur du moyeu (41), la denture extérieure (23) et la denture intérieure (43) s'engrenant l'une dans l'autre pour transmettre le couple de rotation entre l'arbre (11) et le moyeu (41), des premiers moyens de sûreté axiale agissant entre l'arbre (11) et le moyeu (41), empêchant que le moyeu (41) ne se déplace encore sur l'arbre (11), formés par une face de butée sur le moyeu (41) et une face antagoniste sur l'arbre (11) ou sur une pièce, reliée à celui-ci, sur une extrémité (44) du moyeu (41) côté tige d'arbre, et des deuxièmes moyens de sûreté axiale agissant entre l'arbre (11) et le moyeu (41) et empêchant que le moyeu (41) ne s'enlève de l'arbre (11) et comportant une bague de sûreté (51) située sur l'extrémité d'arbre (27) et sur l'extrémité (47) côté extrémité d'arbre du moyeu (41), et s'engageant dans des évidements radiaux (48, 54) de l'arbre (11) et du moyeu (41), formant des faces de butée pour cette bague sur l'arbre (11) et le moyeu (41), **caractérisé en ce que** l'évidement radial (54) de l'arbre (11) forme une première face de butée pour la bague de sûreté (51), l'évidement radial (54) étant en forme de rainure annulaire (24) d'un diamètre d1 et comportant un étage (55) adjacent dans le sens de l'extrémité d'arbre (27) d'un diamètre d2, d2 étant plus grand que d1 et le moyeu (41) a, sur l'extrémité (47) côté extrémité d'arbre, une gorge tournée (48) qui s'élargit et forme une deuxième face de butée pour la bague de sûreté (51) et la bague de sûreté (51) est en forme de circlip.

2. Dispositif selon la revendication 1, **caractérisé en ce que** le diamètre d2 de l'étage de rainure annulaire est plus petit que le diamètre de base des dents de la denture extérieure (23) de l'arbre (11).

3. Dispositif selon l'une quelconque des revendications 1 ou 2, **caractérisé en ce que** la largeur d'entrefer de la rainure annulaire (24) est supérieure ou égale (≥) au diamètre de la section annulaire de la bague de sûreté (51) et la largeur d'entrefer de l'étage de rainure annulaire (55) est inférieure ou égale (≤) au diamètre de la section annulaire de la bague de sûreté (51).

4. Dispositif selon l'une quelconque des revendications 1 à 3, **caractérisé en ce que** la largeur d'entrefer de la rainure annulaire (24) est plus grande que la largeur d'entrefer de l'étage de rainure annulaire (55).

5. Dispositif selon l'une quelconque des revendications 1 à 4, **caractérisé en ce que** la largeur d'entrefer de la rainure annulaire (24) est approximativement deux fois plus grande que la largeur d'entrefer de l'étage de rainure annulaire (55).

6. Dispositif selon l'une quelconque des revendications 1 à 5, **caractérisé en ce que** la rainure annulaire (24) présente un flanc (30) vertical dirigé vers l'axe (56) de la tige d'arbre et un flanc (31) vertical dirigé vers l'extrémité d'arbre, et l'étage de rainure annulaire (55) un flanc (57) vertical dirigé vers l'extrémité d'arbre.

7. Dispositif selon l'une quelconque des revendications 1 à 6, **caractérisé en ce que** le diamètre de la section annulaire de la bague de sûreté (51) est plus grand que la distance entre le fond de rainure (58) de l'étage de rainure annulaire (55) et la face périphérique (49) de l'évidement (48).

8. Dispositif selon l'une quelconque des revendications 1 à 7, **caractérisé en ce que** les premiers moyens de sûreté axiale comportent une sortie de denture (28) de la denture extérieure (23) et une cassure d'arête de dent (46) correspondante sur l'extrémité, côté tige d'arbre, de la denture intérieure (43) du moyeu (41).

9. Dispositif selon l'une quelconque des revendications 1 à 8, **caractérisé en ce que** la denture intérieure (43) et la denture extérieure (46) sont durcies au moyen d'un procédé de traitement thermique et la rainure annulaire (24) et/ou l'étage de rainure annulaire (55) ne sont pas durcis.

10. Procédé de fabrication d'un arbre pour un dispositif selon l'une quelconque des revendications 1 à 9, **caractérisé en ce qu'**à partir d'un arbre cylindrique lisse droit on perce d'abord dans un ordre quelconque sur l'extrémité d'arbre, une rainure annulaire (24) et un étage de rainure annulaire (55) à une faible distance de l'extrémité d'arbre (27), et on produit ensuite une denture extérieure (23) sans que la rainure annulaire (24) et l'étage de rainure annulaire (55) ne subissent une modification agissant ainsi sur la fonction.

11. Procédé selon la revendication 10, **caractérisé en ce qu'**on produit la denture extérieure (23) au moyen d'une matrice de denture en commençant par la rainure annulaire (24) jusqu'à la sortie de denture (28) dans la tige d'arbre (21) à l'aide d'une opération de pressage axial.

12. Procédé selon la revendication 10, **caractérisé en ce qu'**on roule la denture extérieure (23) au moyen d'outils à rouler.

13. Procédé selon la revendication 10, **caractérisé en ce qu'**on réalise la rainure annulaire (24) et/ou l'étage de rainure annulaire (55), sans démonter l'arbre (11), avec toutes les autres opérations de décolletage sur l'arbre (11).

14. Procédé selon la revendication 11, **caractérisé en ce que** l'étape de réalisation de la denture extérieure (23) est la dernière opération d'usinage pratiquée sur l'arbre (11).
